(19)

Europäisches Patentamt
European Patent Office
Office européen des brevets

(11) **EP 4 530 788 A1**

(12) **EUROPEAN PATENT APPLICATION**

(43) Date of publication:
**02.04.2025 Bulletin 2025/14**

(21) Application number: **23383003.3**

(22) Date of filing: **29.09.2023**

(51) International Patent Classification (IPC):
**G05D 1/85** *(2024.01)*      **G05D 101/15** *(2024.01)*
**G05D 109/25** *(2024.01)*

(52) Cooperative Patent Classification (CPC):
**G05D 1/46; G05D 1/854;** G05D 2101/15;
G05D 2109/254

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Villanueva-Aguado, Mauro**
**38769 Sta. ruz de Tenerife (ES)**

(72) Inventor: **Villanueva-Aguado, Mauro**
**38769 Sta. ruz de Tenerife (ES)**

(74) Representative: **Balder IP Law, S.L.**
**Paseo de la Castellana 93**
**5ª planta**
**28046 Madrid (ES)**

(54)   **CONTROLLER FOR CONTROLLING THE TRAJECTORY OF A QUADROTOR**

(57)   Controller (1) for controlling the trajectory of a quadrotor (Q) provided with propellers (P), which comprises a closed loop whereby a control signal ($u_f$) is fed to the thrust, the control signal ($u_f$) being:

$$u_f = ma_r^B + Rf_a^B + mg^B - K_p e_p - K_v e_v - \phi\left(x\right)\hat{A} \quad (8)$$

where:
$a_r$ is the reference acceleration of the desired trajectory;
$e_p = p - p_r$ is the position tracking error;
$e_v = v - v_r$ is the velocity tracking term;
**Kp** and **Kv are** positive definite control gain matrices for position and velocity respectively; $f_a^B$ are the modelled aerodynamic forces in the body frame;

**R** is the body to inertial frame Rotation Matrix; such that the terms $ma_r^B + Rf_a^B + mg^B$ form the nominal model feedforward, $K_p e_p - K_v e_v$ form the proportional feedback terms wherein $\phi(x)A$ are the unmodelled forces which form the feedback adaptation term that comprises the unmodeled forces, $\phi(x)$ is a Neural Network that is trained offline, and **A** is a latent variable that is adapted online; wherein $\phi(x)$ has been obtained through training of data corresponding to different propeller damage conditions.

## Description

### TECHNICAL FIELD

The present invention belongs to the specific sector of controllers for quadrotors, and more specifically to increase their resilience to operational damages.

### STATE OF THE ART

Unmanned Aerial Vehicles (UAVs) offer unmatched versatility & agility, with the potential of revolutionizing a wide range of fields, many not currently envisaged yet.

Manned UAVs require a trained operator to fly, which is a bottleneck for its availability, especially in developing countries. Also, sophisticated "top of the notch" technological concepts combined with harsh operating conditions (low altitude, cluttered surroundings, low visibility and bad weather) - that impede helicopters to operate to avoid risks to their crews-increase the frequency and number of failure modes, requiring qualified maintenance and rendering high downtimes. Autonomous UAVs make away the need of a trained operator, which solves the first stopper. The downside is the limited sensors and computational capabilities available onboard, that present significant challenges that must be solved to enable the wider adoption of autonomous UAVs.

The second objective is to set the pace of futures developments to achieve a *"Resilient Drone"* technological toolbox, so that operation can continue, albeit partially hampered, in highly demanding situations.

In this invention only one failure mode is tackled, the most prevalent one, known as blade damage. The achieved empirical results prove the soundness of this approach.

Only in this way it will be feasible to provide sustainable widespread and cheap availability of applications such as delivering vital supplies in remote locations, as lack of transport infrastructures and accessibility continues to be one of the greatest impediments, even in developed countries, specially under catastrophic circumstances, which are becoming sadly more frequent, severe and widespread. The horizon of such applications is to be further widened, as future UAV speed, operational range and payload capacity is to be soon surmounted, being capable of complementing support currently only provided by manned helicopters (another scarce resource) such as any payload precise delivery and extraction, damaged replacement parts, food & water, as well as human beings and animals, etc. Accurate trajectory tracking of quadrotors, a common type of UAV with four rotors, is a specially challenging problem due to the complex aerodynamic disturbances at high speeds which consequently introduce large tracking errors. These aerodynamic effects consist of the propeller lift and drag which are dependent on the induced airstream velocity, fuselage drag, downwash and turbulent interactions between propellers and fuselage" are difficult to model. This problem is further compounded in the case that the propellers are damaged significantly changing the aerodynamic model of the quadrotor.

Designing such a controller does not only involve accurately tracking a trajectory across a wide range of propeller damage conditions but also designing one that remains computationally tractable to run onboard. Thus, a trade-off between model accuracy & complexity must be considered. To the best of our knowledge no prior work has been performed on the field of adaptive trajectory control to propeller damage, despite the fact that propeller damage either caused by collisions or degradation is a common occurrence in real-world situations. Conventional approaches to trajectory tracking use simple linear or quadratic drag models to capture these aerodynamic effects, while simple yet effective at low speeds their accuracy quickly degrades at higher speeds. Additionally, they cannot account for changes in the aerodynamic model.

While high-fidelity aerodynamic models have been derived from Computational Fluid Dynamic simulations, these simulations require platform-specific meshing of hundreds of millions of grid points and multiple days of solving in large compute clusters and ultimately are condensed into simplified models to be computationally tractable onboard.

Advances in Neural Networks (NN) and small powerful GPUs have enabled promising results approximating these aerodynamic effects while remaining computationally tractable to run onboard a quadrotor. NN provide a higher accuracy than the simple drag models while requiring a fraction of the time and computation of CFD derived models.

However, implementing NN in a drone controller requires addressing the unpredictable nature of their output, remaining a largely unexplored challenge.

Quadrotor Trajectory Tracking Control

Quadrotors are inherently unstable nonlinear platforms. Early work on quadrotor control achieved stable hover and near-hover flight using well established control schemes such as Proportional-Integral-Derivative (PID) or Linear-Quadratic Regulator (LQR). These controllers rely on the small-angle assumption to linearize the dynamics of the system, thus are most effective at low speeds. Despite this drawback cascaded PID control is the most common controller architecture in off-the-shelf flight controllers due to its simplicity, ease-of-tuning and good enough performance.

As quadrotors have become more powerful and lightweight, capable of executing aggressive trajectories, nonlinear flight controllers have been proposed to cope with the nonlinearities in the attitude dynamics. Nonlinear flight controllers such as Nonlinear Dynamic Inversion (NDI) transform the nonlinear dynamics into a linear input-output map enabling the use of a linear control law. However, exact dynamic inversion suffers from a lack of robustness as it quite sensitive to sensor noise as well as modelling uncertainty. Variants of NDI have been proposed to solve this problem, such as backstepping design which recursively designs a controller, starting from a known stable inner system and progressively backs-out stabilizing the entire nonlinear system. A more recent variant is Incremental Nonlinear Dynamic Inversion (INDI), which improves robustness by gradually applying control inputs based on inertial measurements. State-of-the-art trajectory tracking algorithms can be categorized into predictive or non-predictive methods. Nonpredictive methods track a single reference step while predictive methods encode several future timesteps into the control command. Differential-Flatness Based Control (DFBC), a non-predictive method, takes advantage of the fact that quadrotors are differentially flat systems allowing for the reformulation of the trajectory tracking problem into a state tracking problem. DFBCs are combined with an outer loop INDI controller and aerodynamic model to achieve impressive tracking performances at high-speeds, with a Position Root-Mean-Squared Error (RMSE) of as little as 12.2 [cm] with a top speed of 20 [m/s]. However, relies on optical encoders for direct motor speed feedback or is limited to x-y plane trajectories and uses a very high frequency attitude controller running at 4 [kHz].

Most importantly, DFBC relies on the quadrotor model to generate the reference states and is thus susceptible to modelling mismatch, for example reducing the thrust coefficient by 30% will lead to significant performance degradation or even crashing, with position RMSE degrading from 8.5 [cm] to 100.4 [cm] [18] a more than tenfold increase.

Nonlinear Model Predictive Control (NMPC) is the most prevalent predictive method. NMPCs generate motor commands in a receding horizon fashion, solving the constrained nonlinear optimization problem over the predicted time horizon minimizing for tracking error. Similarly, the performance of NMPCs is further improved by adding an outer loop INDI controller and aerodynamic model. NMPCs are able to minimize the tracking error across multiple future time-steps whereas DFBCs are too short-sighted only considering one reference point. This allows NMPCs to outperform DFBCs at tracking trajectories at high speeds, especially for dynamically infeasible trajectories. NMPCs achieve a state-of-the-art position RMSE of 10.2 [cm] with a maximum speed of 20 [m/s]. Albeit, solving this nonlinear optimization problem over several future time-steps requires significant computational resources, in the order of 100 times greater than DFBC. Despite advances in powerful embedded computers and nonlinear solvers deploying NMPC onboard is still a challenge, requiring an NVIDIA Jetson TX2 to run the algorithm onboard at 100 [Hz] in adding significant weight and power consumption.

## 2.2 Adaptive Control

Adaptive control of systems with parametric uncertainty has been extensively researched. Adaptive controllers are often an augmentation to existing controllers rather than a standalone controller. In the field of UAVs adaptive controllers can be categorized into Model Identification Adaptive Controllers (MIACs) or Model Reference Adaptive Controllers (MRACs).

MRACs use an adaptive controller, typically an L1 adaptive controller, to drive the system towards a desired reference model behaviour. MRACs have been successfully deployed in quadrotors, demonstrating slight trajectory tracking degradation with unmodeled weights attached or loss-of-thrust. Albeit these results are achieved tracking simple circular trajectories not exceeding 2 m/s with a ground station in-the-loop, require powerful embedded computers or have poor tracking performance.

On the other hand, MIACs perform System Identification (SI) online to estimate the values of unknown linear coefficients which are then mixed with known basis functions. The selection of basis functions may be challenging, they should reflect important features of the underlying dynamics. Physics-based modelling is typically used to design these basis functions; however this requires extensive knowledge of the system and suffers from convergence problems when there is lack of excitation. Alternatively, random Fourier features can be used as basic functions as they can capture all underlying dynamics given a sufficient amount of features.

However, the high-dimensional feature space may not be an efficient representation as features are redundant or irrelevant. Nevertheless, random Fourier features are used in to learn an acceleration error model of a quadrotor with a drag plate attached in windy conditions improving on the performance of an L1 adaptive controller.

## Adaptive Neural Control

The ability of NNs to accurately and computationally efficiently approximate nonlinear functions has drawn interest in the field of adaptive control. Early work used NNs in MRACs to solve the identification problem of nonlinear systems creating a reference model whose weights are updated online based on the error between the system and model output.

These networks where shallow and lacked pretraining, limiting their performance and requiring the initial guess of network weights to be close to the correct guess to ensure stability.

More recently, a quadrotor has performed an impressive flip in wind using a NN to predict the unknown forces, the weights are updated based on the position & velocity error. Albeit the network is still limited to a 3-layer architecture lacking pretraining.

Lately, meta-learning has drawn attention as scheme that "learns-to-learn" efficient models of systems from data gathered in varying conditions. The learned model is capable of fast adaptation to highly dynamic environments. Meta-Learning algorithms typically can be decomposed into two phases: offline learning and online adaptation. In the offline learning phase the goal is to learn a model from data collected in various environments that captures common features shared across all environments. In the online adaptation phase the goal is to adapt this model to the current environment based on the data available. A naive approach to online adaptation would adapt the entire network online, however this is a computationally expensive task severely limiting the depth of the network and lacking stability guarantees. A more sophisticated approach augments the NN output with latent variables identified online which represent the unknown environmental factors allowing for rapid adaptation with little computational burden. Meta-Learning adaptive control has achieved successful adaptive control of quadrotors carrying suspended payloads and strong winds. Of particular interest are the results achieved in PaparazziUAV. URL: https://wiki.paparazziuav.org/wiki/Main_Page whose "Neural-Fly" controller demonstrates state-of-the-art tracking performance in strong & varying wind conditions achieving a position RMSE of 9.4[cm] at wind speeds of 12.1 [m/s] with little computational cost.

The Paper "Neural-Fly Enables Rapid Learning for Agile Flight in Strong Winds" Michael O'Connell, Guanya Shi, Xichen Shi, Kamyar Azizzadenesheli, Anima Anandkumar, Yisong Yue, and Soon-Jo Chung (Science Robotics, volume 7 of 66, page eabm6597. American Association for the Advancement of Science, May 2022) discloses a controller for controlling the trajectory of a quadrotor.

## DESCRIPTION OF THE INVENTION

To overcome these state-of-the-art limitations, the present invention proposes a controller for controlling the trajectory of a quadrotor, which comprises a closed loop whereby a control signal ($\boldsymbol{u_f}$) is fed to the attitude loop and thrust mixer, the control signal ($\boldsymbol{u_f}$) being:

$$\boldsymbol{u}_f = m\boldsymbol{a}_r^B + \boldsymbol{R}\boldsymbol{f}_a^B + m\boldsymbol{g}^B - \boldsymbol{K}_p\boldsymbol{e}_p - \boldsymbol{K}_v\boldsymbol{e}_v - \phi\left(\boldsymbol{x}\right)\hat{\boldsymbol{A}} \qquad (8)$$

where:

$\boldsymbol{a_r}$ is the reference acceleration of the desired trajectory;

$\boldsymbol{e_p} = \boldsymbol{p} - \boldsymbol{p_r}$ is the position tracking error;

$\boldsymbol{e_v} = \boldsymbol{v} - \boldsymbol{v_r}$ is the velocity tracking term;

$\boldsymbol{Kp}$ and $\boldsymbol{Kv}$ are positive definite control gain matrices for position and velocity respectively;

$\boldsymbol{f_a^B}$ are the modelled aerodynamic forces in the body frame;

$\boldsymbol{R}$ is the body to inertial frame Rotation Matrix;

such that the terms $m\boldsymbol{a}_r^B + \boldsymbol{R}\boldsymbol{f}_a^B + m\boldsymbol{g}^B$ form the nominal model feedforward, $\boldsymbol{K_p}\boldsymbol{e_p}$ - $\boldsymbol{K_v}\boldsymbol{e_v}$ form the proportional feedback terms wherein $\phi(x)A$ are the unmodelled forces which form the feedback adaptation term that comprises the unmodeled forces, $\phi(x)$ is a Neural Network that is trained offline, and $\boldsymbol{A}$ is a latent variable that is adapted online; wherein $\phi(x)$ has been obtained through training of data corresponding to different propeller damage conditions.

In some embodiments, the deep neural network $\phi(x)$ is implemented through a domain adversarial meta-learning algorithm.

In some embodiments, the inputs of the network $\phi(x)$ are the velocity, quaternion and rpm states x = [v, q, rpm] of the quadrotor (Q), while the output representation is y = [y1, y2, y3, 1].

In some embodiments, the online adaptation $\boldsymbol{A}$ is carried out with a Kalman-filter like estimator.

## BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:

Figure 1 illustrates the Coordinate System Definitions.

Figure 2 is a Control Diagram of the Adaptive Neural Controller according to the invention.

Figure 3 is a Neural Network $\phi$ Architecture according to the invention.

Figure 4 shows the Training and Validation Loss of $\phi$ Network.

Figure 5 shows t-SNE plots of the Training Adaptation Coefficients A* with $\alpha$ = 0.1 and $\alpha$ = 0.

Figure 6 shows the Residual Force Predictions $f\hat{}_{ext} = \phi(x)A^*$ for No Propeller Damage Condition.

Figure 7 shows the Controller Tracking Performance Comparison on Minimum Snap Trajectory with $\mu$ = 0.7.

Figure 8 shows the Adaptive Neural Controller Average Position RMSE Bins vs. Speed with 99% Confidence Interval.

Figure 9 shows the Propeller Damage Condition Estimation from Online Adaptation Coefficients with $\mu$ = 1.1.

Figure 10 shows Trajectories flown using an Adaptive Neural Controller according to the invention with no propeller Damage.

Figure 11 shows Trajectories flown using Nonlinear Controller with no propeller Damage.

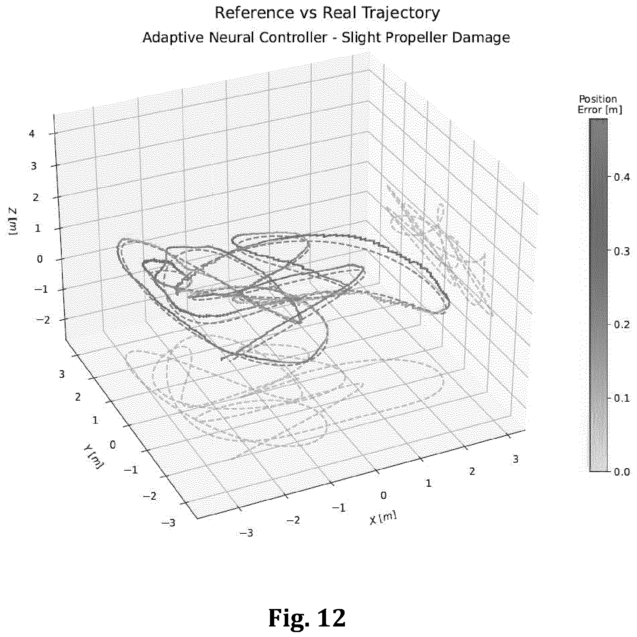

Figure 12 shows Trajectories flown using Adaptive Neural Controller according to the invention with slight propeller Damage.

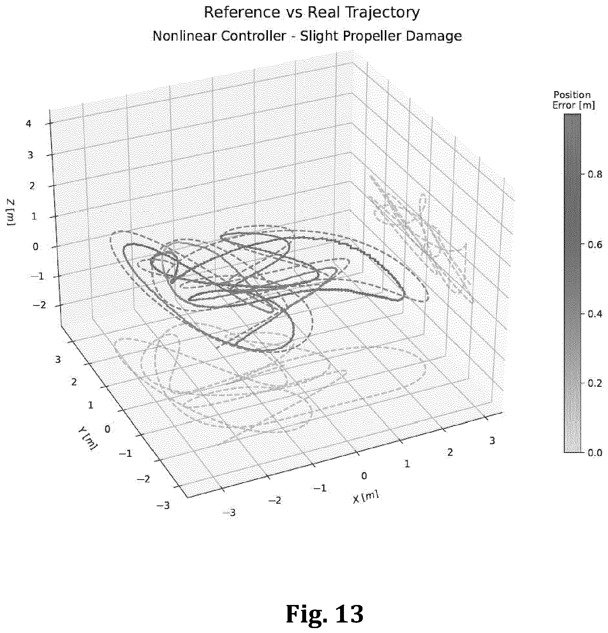

Figure 13 shows Trajectories flown using a Nonlinear Controller with slight propeller Damage.

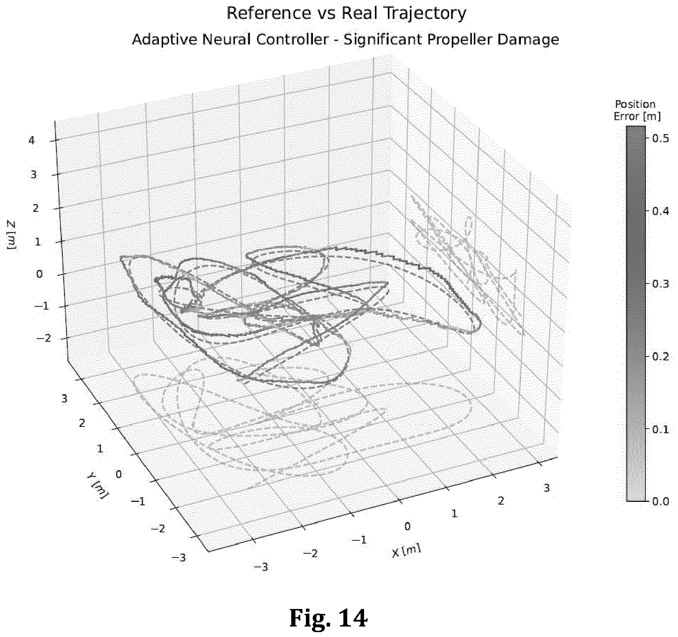

Figure 14 shows Trajectories flown using Adaptive Neural Controller according to the invention with significant propeller Damage.

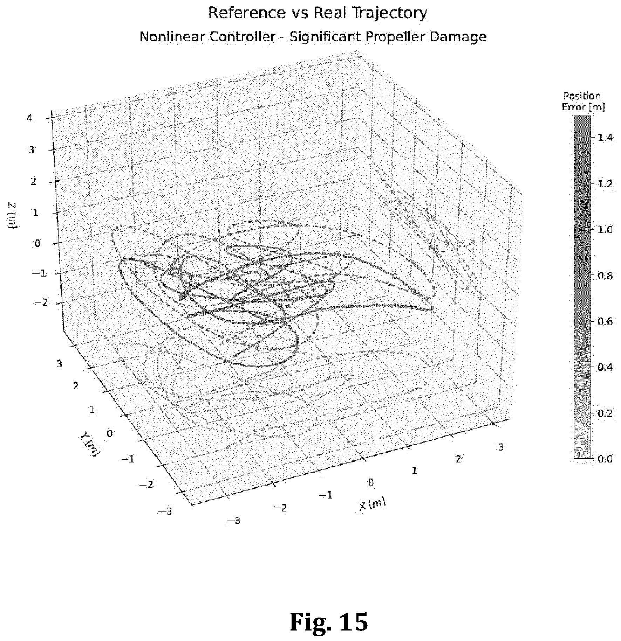

Figure 15 shows Trajectories flown using a Nonlinear Controller with significant propeller Damage.

## DESCRIPTION OF A WAY OF CARRYING OUT THE INVENTION

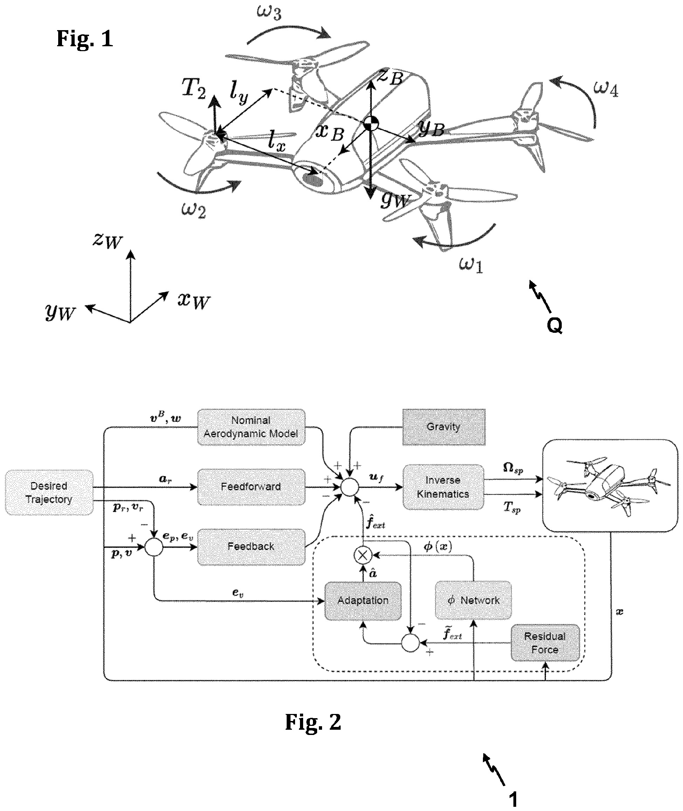

In the present specification paper vectors are denoted in lowercase bold letters **p** and matrices in uppercase bold letters **I,** otherwise they are scalars. Two right-handed coordinate frames are used shown in Figure 1, the body frame {$x_B$, $y_B$, $z_B$} located at the center of mass of the quadrotor with $x_B$ pointing forward and $z_B$ aligned with the collective thrust direction and the inertial world frame {xw, yw, zw} with zw pointing in the opposite direction of gravity. Vectors with the superscript $\square^B$ are expressed in the body frame and those without one are expressed in the world frame. The rotation from inertial frame to body frame is represented by the rotational matrix R = [$x_B$, $y_B$, $z_B$] $\in$ SO(3).

The quadrotor is modelled as a six degree-of-freedom rigid body with four inputs corresponding to the commanded rpms of the motors. The translational dynamics is given by:

$$a = \frac{f_t + f_a + f_{res}}{m} + g \qquad (1)$$

where a is the acceleration of the quadrotor's center of gravity; $f_t$ is the collective thrust; m is the quadrotor mass; $f_a$ represents the aerodynamic model forces; $f_{res}$ captures the remaining unmodeled forces; $g$ is the gravity vector. The rotational kinematics and dynamic equations are expressed as:

$$\dot{q} = \frac{1}{2} q \otimes \Omega^B \qquad (2)$$

$$\dot{\Omega}^B = I^{-1} \left( \tau^B + \tau_{ext}^B - \Omega^B \times I\Omega^B \right) \qquad (3)$$

Where $\Omega_B$ is the body frame angular velocity vector; $I \in R^{3\times3}$ is the quadrotor diagonal moment of inertia matrix; $\tau$ are the modelled body torques and $\tau_{ext}$ accounts for the any unmodeled disturbance moments. The symbol $\otimes$ represents the Hamilton quaternion product.

The thrust and torque acting on the quadrotor are modelled in Equation (4) and Equation (5) respectively, we are assumed stiff propellers with no rotor drag and neglect moments caused by aerodynamic effects, angular acceleration of rotors and gyroscopic effects.

$$f_t^B = \left[ 0, 0, c_t \sum_{i=1}^{4} \omega_i^2 \right]^T \qquad (4)$$

$$\tau^B = \begin{bmatrix} l_y c_t & -l_y c_t & -l_y c_t & l_y c_t \\ l_x c_t & l_x c_t & -l_x c_t & -l_x c_t \\ c_\tau & -c_\tau & c_\tau & -c_\tau \end{bmatrix} \omega^2 \qquad (5)$$

where $c_t$ is the propeller thrust coefficient and c, the propeller torque coefficient; $lx$ and $ly$ are the moment arms shown in Figure 1.

The known following aerodynamic model captures the major aerodynamic effects in a computationally efficient manner:

$$f_a^B = -\sum_{i=1}^{4} \omega_i \begin{bmatrix} k_x \\ k_y \\ k_z \end{bmatrix} \odot v^B + \begin{bmatrix} 0 \\ 0 \\ k_h \left( v_x^{B2} + v_y^{B2} \right) \end{bmatrix} \qquad (6)$$

where $v^B = R(q)^T v$ is the body frame velocity vector and $k_x$, $k_y$, $k_z$, $k_h$ are the aerodynamic coefficients identified from flight data. The symbol $\odot$ represents a vector element-wise multiplication.

The adaptive neural controller of the present invention follows closely to the "Neural-Fly" controller architecture cited in the background section. This data-driven trajectory tracking controller uses a learning-based approach to achieve fast and accurate online adaption by incorporating pre-trained representations using deep learning. The controller is composed of two main components, offline meta-learning and online adaptive control.

These two components together build a model of the residual forces not captured by the nominal aerodynamic model acting on a quadrotor of the form:

$$f_{res}(x, k) \approx \phi(x) A(k) \qquad (7)$$

where $\phi$ is a representation function, in this case a neural network, that maps the residual forces dependant on the quadrotors state $x$ to a shared representation across all sampled environments. $A$ is a set of linear coefficients that adapt to the current quadrotor environment $k$. The offline training phase consists of training $\phi$, a DNN using Domain Adversarial Meta-Learning (DAIML) to learn a propeller damage invariant representation of the unmodeled forces.

According to the invention, the online adaptation phase aims to adapt the linear coefficients in $A$ to the current propeller damage condition using a composite adaptive controller while maintaining stability and robustness.

Combining the translational dynamics of a quadrotor in (1) with the estimate of the residual force in (12) (see below) leads to the control law of the adaptive neural controller:

$$\boldsymbol{u}_f = \underbrace{m\boldsymbol{a}_r^B + \boldsymbol{R}\boldsymbol{f}_a^B + mg^B}_{\text{nominal model feedforward}} - \underbrace{\boldsymbol{K}_p \boldsymbol{e}_p - \boldsymbol{K}_v \boldsymbol{e}_v}_{\text{PD feedback}} - \underbrace{\boldsymbol{\phi}\left(\boldsymbol{x}\right)\hat{\boldsymbol{A}}}_{\text{adaptation}} \qquad (8)$$

where $e_p = p - p_r$ is the position tracking error, the subscript $\square_r$ denotes the reference trajectory, i.e. $a_r$ is the reference acceleration of the desired trajectory; $e_v = v - v_r$ is the velocity tracking term; $\boldsymbol{Kp}$ and $\boldsymbol{Kv}$ are positive definite control gain matrices for position and velocity respectively.

The output of (8) is the control law $\boldsymbol{u_f}$, a vector of commanded forces from which the corresponding attitude and thrust is obtained through inverse kinematics.

The adaptive neural controller replaces the position controller with the output the desired attitude and thrust commands sent to the inner attitude control loop and thrust mixer respectively. In contrast to a known PID controller, the adaptive neural controller also includes nominal model feedforward terms to account for the known aerodynamic effects and desired acceleration, improving tracking of the reference trajectory. The architecture of the adaptive neural controller according to the invention is shown in Figure 2.

Offline Training

The goal of the offline training phase is to learn a representation function $\phi(x)$ such that for any condition k a latent variable $\boldsymbol{A}$ exists such that $\phi(x)A(k)$ approximates $f_{res}(x, k)$ well. A DNN is used to learn this representation function $\phi$, taking advantage of the representation power of DNNs to accurately approximate any nonlinear function given a sufficient amount of neurons and training data. The optimal representation $\phi^*$ is typically obtained by minimizing the loss:

$$\min_{\phi, \boldsymbol{A}^1, \cdots, \boldsymbol{A}^K} \sum_{k=1}^{K} \sum_{i=1}^{N^k} \left\| \boldsymbol{y}_i^k - \phi\left(\boldsymbol{x}_i^k\right)\boldsymbol{A}^k \right\| \qquad (9)$$

where K is the total amount of conditions sampled and $N^k$ is the total amount of data-points collected with condition k. The loss is the Euclidean norm of the error between the measured unmodeled forces y and the network output $\phi(x)A$ across all sampled conditions and data-points.

The minimization problem also involves the latent variables $\boldsymbol{A^1}, \cdots, \boldsymbol{A^K}$, thus back-propagation is also performed through A to ensure that the optimal latent variables are found.

The distribution of the quadrotor states $\boldsymbol{x}$ will vary depending on the propeller damage condition $k$ flown. For example, propeller $rpm$ values will increase as propeller damage worsens to cope with the loss of lift. This inherent domain shift in $x$ caused by a shift in $k$ may lead to over-fitting of the network $\phi$. The network $\phi$ could learn the change in the unmodeled forces due to k via the change in the distribution of $x$, instead of learning a propeller damage invariant representation. To solve this domain shift problem an adversarial loss is used instead:

$$\max_{h} \min_{\phi, \boldsymbol{A}^1, \cdots, \boldsymbol{A}^K} \sum_{k=1}^{K} \sum_{i=1}^{N^K} \left( \left\| \boldsymbol{y}_i^k - \phi\left(\boldsymbol{x}_i^k\right)\boldsymbol{A}^k \right\| \right.$$
$$\left. - \alpha \cdot \mathcal{L}_h\left(h\left(\phi\left(\boldsymbol{x}_i^k\right)\right), k\right)\right) \qquad (10)$$

In this adversarial loss the discriminator network h is competing against $\phi$ in a zero-sum game. The network h attempts to predict the condition k from the output of the network $\phi(x)$, while $\phi$ attempts to approximate the residual force measurement y while making the job of h harder. The influence of the discriminator network h is controlled through the regularization term $\alpha \geq 0$. The loss function of h, is typically a cross entropy loss function used to train classification models

$$\mathcal{L}_{h} = -\sum_{i \in D} \delta_{k=j} \odot \log\left(h\left(\phi\left(x_i^k\right)\right)\right) \quad (11)$$

The cross-entropy loss compares the log of the output of the discriminator network $h(\phi(x^k_j)$, a vector containing the classification probabilities of each of the K conditions, with the ground truth classification vector $\delta_j$. For example, if a data point is collected with no propeller damage with index $k = 1$ the corresponding ground truth vector is $\delta_i = [1, 0, 0]$.

The known DAIML algorithm is disclosed in "Neural-Fly Enables Rapid Learning for Agile Flight in Strong Winds" from o' Connell, Shi et Al.

Online Adaptation

An online adaptation law based on a Kalman-filter estimator is used to update the estimate of the linear coefficients $\hat{A}$ through (12). While in the offline training phase, the optimal coefficients $A^*$ are obtained by minimizing the least squares force prediction error. In the online adaptation phase the ultimate goal is to minimize the position tracking error.

Thus, the linear coefficients are updated based on a composite error, consisting of the force prediction error and the position tracking error, improving the trajectory tracking performance of the controller.

Optionally, a Kalman-filter estimator can perform an automatic tuning of the gain matrix $P$ given by (13). This allows the online adaptation law to estimate the complex latent variable in the presence of varying uncertainties, alleviating the need of constant excitation for accurate estimation.

$$\dot{\hat{A}} = \underbrace{-\lambda\hat{A}}_{\text{regularization}} - \underbrace{P\phi(x)^{\top} R^{-1}\left(\phi(x)\hat{A} - y\right)}_{\text{prediction error}} + \underbrace{P\phi(x)^{\top} s}_{\text{tracking error}}$$

$$(12)$$

$$\dot{P} = -2\lambda P + Q - P\phi(x)^{\top} R^{-1} + \phi(x) P \qquad (13)$$

In practice, the adaptation law outlined is implemented in a digital system which requires the discrete version of the Kalman-filter. This discrete Kalman-filter suffers from numerical stability and convergence issues particularly in the covariance matrix $P$. As known, coarse integration step sizes of the continuous time adaptation law would sometimes result in $P$ becoming non-positive-definite. Their proposed solution, splitting the adaptation law into two steps, a propagation step and an update step, has been implemented.

Trajectory Generation

The desired trajectory of the quadrotor is defined using a known spline that minimizes snap, the derivative of acceleration with respect to time $\mathring{a}$. Minimum snap trajectories are desirable for quadrotor tracking since motor commands and attitude accelerations are proportional to snap. By minimizing snap these trajectories create a sense of gracefulness of the quadrotors motion, desirable for reducing sensor measurement noise and avoiding excessive control inputs. Additionally, polynomial splines are easily differentiable useful when calculating the velocity and acceleration of the reference trajectory.

Given a list of N waypoints $W=[W1,...,WN]$ and $W_n \in R^3$ the desired position of the quadrotor is given by $pm = [pm_x (t), pm_y (t), pm_z (t)]$ with each axis described by one spline consisting of $M = N - 1$ polynomials. The minimum snap spline of each axis is obtained by solving the minimization problem:

$$\min_{p_1,\cdots,p_M} \sum_{m=1}^{M} \int_0^T \|\ddot{p}_m(t)\| \, dt \quad (14)$$

where $T$ is the amount of time for each waypoint segment.

The invention was validated with the following experimental setup:

The quadrotor platform used is the Parrot Bebop 1, released by Parrot in 2015 as a recreational drone, equipped with a Parrot P7 dual-core Cortex A9 CPU and a MPU6050 IMU. The Parrot Bebop 1 has a thrust-to-weight ratio of T/W ≈ 1.7. The Parrot Bebop 1 has certain advantages for the application of the invention:

(I) the aging onboard CPU has limited computational capacity forcing the online implementation of the adaptive neural controller to be computationally efficient;

(II) the relatively large body fairing introduces complex aerodynamic disturbances even at low speeds which are hard to model

(III) it is equipped with out-of-the-box rpm sensors.

The offline DNN training was performed in Python using Pytorch2 an open-source deep learning framework in combination with WandB3 a powerful tool for managing and tracking machine learning experiments. The test flights are performed in an indoor $10 \times 10 \times 7$ [m$^3$] square volume located in the Delft Aerospace Structures and Materials Laboratory. The CyberZoo is equipped with an OptiTrack motion capture system consisting of eight infrared cameras which provide accurate position, velocity and orientation measurements indoors using the drone's infrared markers. The OptiTrack measurements are fused together with the IMU measurements onboard using an Extended Kalman-Filter (EKF) for accurate state estimation.

Data Collection

The DAIML algorithm requires data to train the DNN representation $\phi$. Data collection consists of logging relevant time-stamped drone states as the quadrotor tracks minimum snap trajectories using a conventional velocity PID controller.

These trajectories are generated from ten randomly sampled waypoints. If at any point throughout the generated trajectory the position and a tracking margin exceeds the limits of the CyberZoo a different set of waypoints is sampled till a suitable trajectory is found. All trajectories will travel roughly the same distance but with varying times, resulting in slower trajectories having more datapoints than faster trajectories. To ensure a more uniform distribution of datapoints across velocities multiple trajectories are logged at higher speeds, preventing the network from over-fitting to the most common velocity regime due to it being over-represented in the data.

To simulate propeller damage all four propellers of the bebop are cut at the tip by approximately 2mm and 4mm corresponding to a 5.3% and 10.5% reduction in blade radius. Replacing the smooth elliptical propeller tips with rough tips increases the wing tip vortices generated by the fast spinning propellers. Resulting in a reduction in propeller lift and increase in propeller drag, altering the aerodynamic effects acting on the quadrotor. Data were collected on the training and validation trajectories outlined in Table 2 for all three propeller conditions: (1) no damage, (2) slight damage (2mm) and (3) significant damage (4mm).

**Table 1: Training and Validation Dataset**

|       | Time Factor ($\mu$) | # | Total Time ($T_{tot}$) [s] | Datapoints |
|-------|---------------------|---|----------------------------|------------|
| Train | 0.2 | 1 | 270 | 7547 |
|       | 0.4 | 2 | 263 | 7486 |
|       | 0.6 | 3 | 311 | 8883 |
|       | 0.8 | 4 | 282 | 7968 |
|       | 1.0 | 5 | 287 | 7923 |
|       | 1.2 | 6 | 205 | 5691 |
| Val   | 0.3 | 1 | 182 | 4815 |
|       | 0.7 | 1 | 81 | 2120 |
|       | 1.1 | 1 | 49 | 1223 |
| Total | - | 22 | 1.930 | 61.624 |

Data Processing

The residual forces acting on the quadrotor are obtained by rearranging Equation (1) to solve for $\boldsymbol{f_{res}}$. The

quadrotor acceleration is computed using 1st-order central difference of the velocity measurements. However, the velocity measurements contain significant noise which would be further amplified when calculating the acceleration derivative. To avoid this, a low pass zero-phase "filtfilt" filter is used to smoothen out the velocity measurements, reducing the noise without introducing lag.

The dataset is divided into the three different propeller conditions $D = \{D^1, D^2, D^3\}$ with each dataset containing $N_k$ input-output pairs $D^k = \{x^k_i, y^k_i\}^{Nk}_{i=1}$ of the relevant drone states and a noisy measurement of the unmodeled forces $y = f_{res} + \varepsilon$, where $\varepsilon$ encompasses all source of noise.

<u>Training</u>

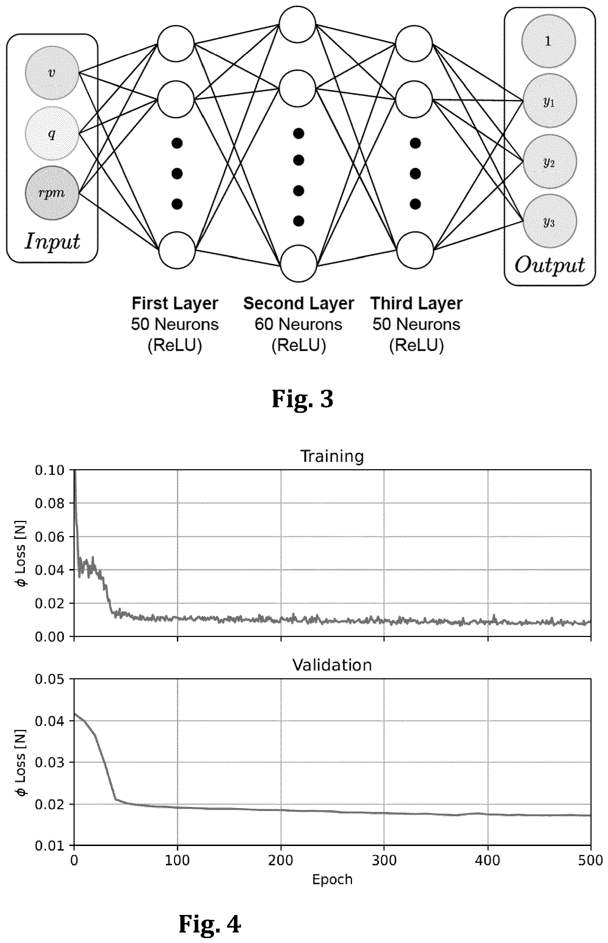

A DAIML algorithm as disclosed in "Neural-Fly Enables Rapid Learning for Agile Flight in Strong Winds" from o'Connell, Shi et Al is used to train an effective representation $\phi$ of the propeller damage invariant aerodynamic effects from the data collected. The inputs of the network $\phi$ are the velocity, quaternion and rpm states $x = [v, q, rpm]$, while the output representation is concatenated $y = [y_1, y_2, y_3, 1]$ to provide a constant term for the adaptation. The architecture of the network $\phi$ consists of [11, 50, 60, 50, 4] fully connected layers with Rectified Linear Unit (ReLU) activation functions as shown in Figure 3. Similarly, the discriminator network h consists of [4, 128, 3] fully connected layers with ReLU activation functions.

The hyperparameters used during training are reported in Table 3, obtained from a sensitivity analysis. The commonly used Adam optimizer, an extended version of stochastic gradient descent, is used to update the weights of both networks $\phi$ and h with learning rates $lr_\phi = 2e^{-3}$ and $lr_h = 4e^{-4}$ and batch sizes $B^t = 128$ and $B^a = 512$ respectively. The normalization term $y = 17$ ensures that the learned adaptation coefficients remain bounded, important for fast adaptation in the online phase. The regularization term a influences the degree of adversarial training. A regularization value of $a = 0.1$ was found to strike the right balance between $\phi$ network performance and disentangling the learned linear coefficients into the separate propeller conditions. The stability of the discriminator network h is improved by using a discriminator training frequency of $\eta = 0.75$, combined with spectral normalization of the discriminator weights.

**Table 2: Hyperparameters of DAIML Algorithm**

| Hyperparameter | Symbol | Value |
|---|---|---|
| $\phi$ **Network** | | |
| Learning Rate | $lr_\phi$ | $2e^{-3}$ |
| Normalization | $\gamma$ | 17 |
| Training Batch Size | $B^t$ | 128 |
| **h Network** | | |
| Learning Rate | $lr_h$ | $4e^{-4}$ |
| Regularization | $\alpha$ | 0.1 |
| Training Frequency | $\eta$ | 0.75 |
| Adaptation Batch Size | $B^a$ | 512 |

The evolution of the $\phi$ network loss given by $\| y - \phi(x)A^* \|$ is shown on the training and validation data in Figure 4. The $\phi$ network efficiently learns to minimize this loss with little over-fitting present in the validation loss.

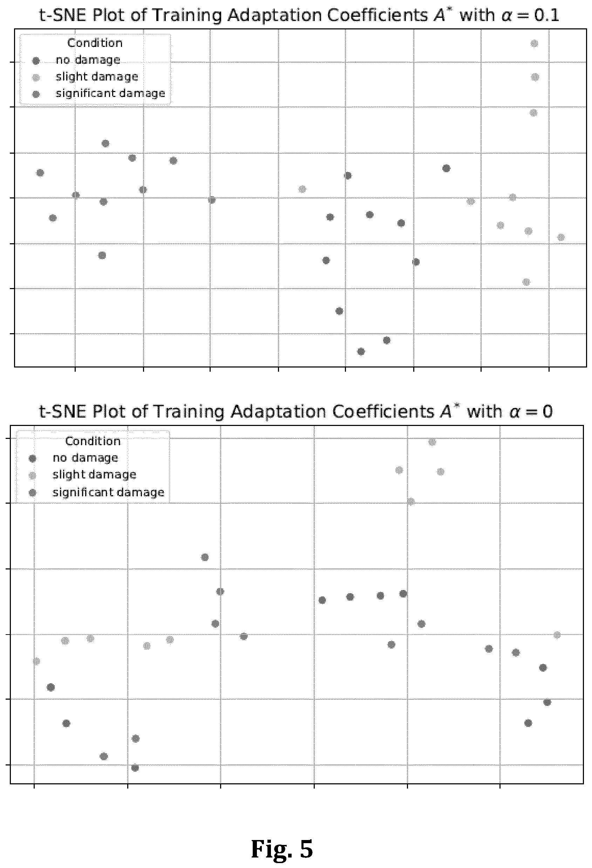

The high dimensional adaptation coefficients are projected into a two-dimensional plane using the t-Distributed Stochastic Neighbor Embedding (t-SNE) dimensionality reduction technique. The t-SNE algorithm preserves local similarities in the higher dimensional data enabling visualization of clusters and patterns. The t-SNE plots of the training adaptation coefficients $A^*$ with a = 0.1 and a = 0 are shown in Figure 5. With a = 0 corresponding to the non-adversarial training case. Adversarial training enforces the adaptation coefficients into explaining clusters that contain the propeller damage condition information, ensuring the trained representation $\phi$ is condition invariant.

<u>Residual Force Prediction</u>

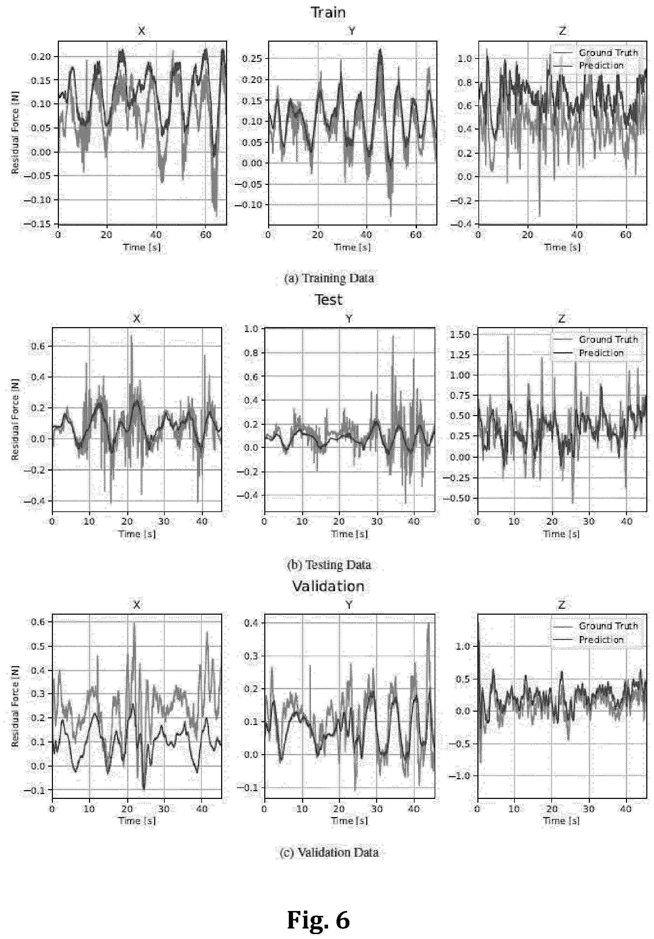

The residual force predictions of the network $\phi$ are shown on the training, testing and validation data for the no propeller damage condition are shown in Figure 6. The adaptation coefficients learned during training corresponding to the no propeller damage condition are used to compute the unmodeled force predictions $f^\wedge_{ext} = \phi(x)A^*$.

The $\phi$ network successfully learns a representation that captures the main features of the residual forces acting on the quadrotor, providing a filtering zero-lag estimate of these unmodeled forces. Even at the relatively slow maximum speeds the Parrot Bebop 1 can reach the conventional aerodynamic model fails to model aerodynamic forces in the order of $f_{res} \approx 0.3$ in the x-y direction and $f_{res} \approx 0.7$ in the z-direction, which the $\phi$ network models.

While the network captures the main features of the unmodeled forces they may be off by a certain offset, this is especially noticeable on the validation data. This may be caused by either the different controller architecture between train/test and validation or due to a different quadrotor of the same model is used. Substantiating the need of adapting coefficients online to account for differences between training data and real-life deployment.

Tracking Performance

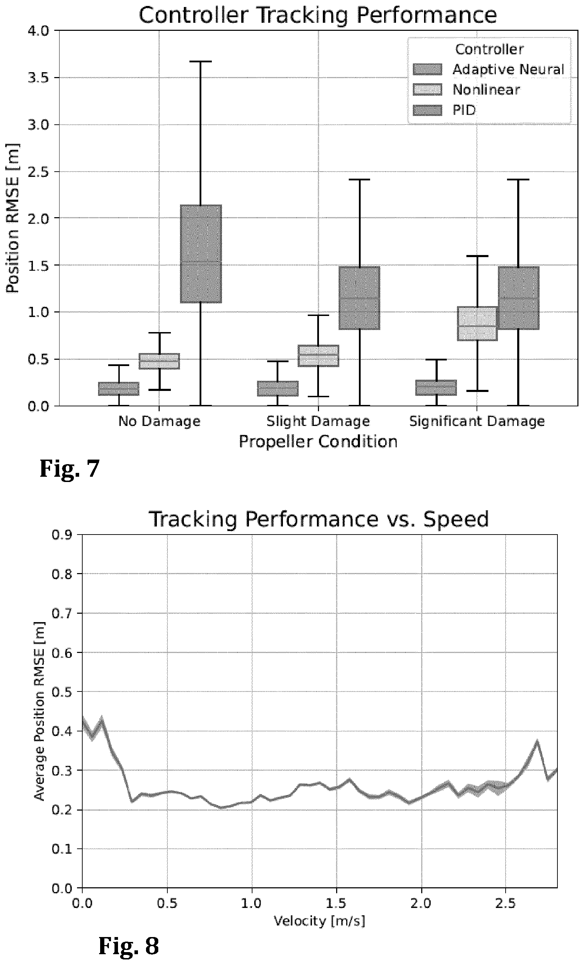

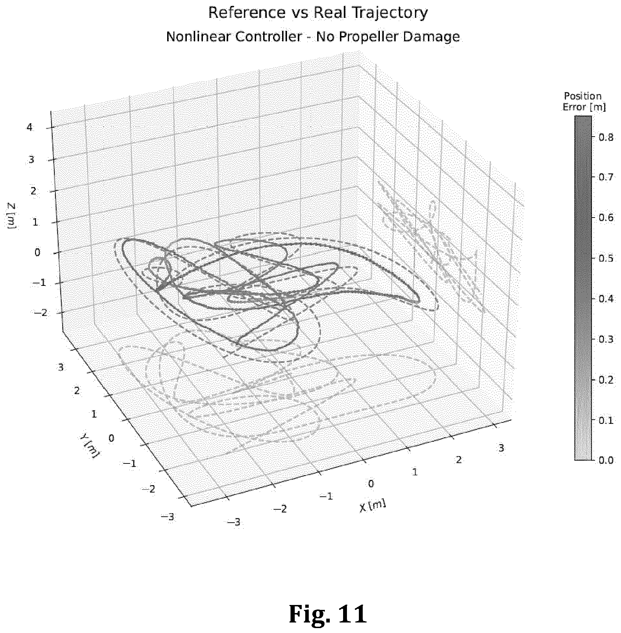

The tracking performance of the neural adaptive controller is compared to that of the nonlinear controller without the adaptation term and a baseline velocity PID controller. The performance of these controllers is measured tracking a randomized minimum snap trajectory with time factor $\mu = 0.7$ and $\mu = 1.1$, shown in Figure 7 and Figure 11 respectively.

The adaptive neural controller according to the invention outperforms the other controllers by a substantial margin, achieving a tracking error one order of magnitude lower than the conventional velocity PID controller and approximately $\approx 60\%$ lower than the nonlinear controller. Most importantly, the tracking performance of the adaptive neural controller barely degrades with a less than 3.0 [cm] increase in tracking error with increasing propeller damage. This showcases the ability of the inventive adaptive neural controller at adapting to the current propeller condition flown.

The deterioration of the tracking performance of the adaptive neural controller with increasing speed is shown in Figure 8. Where the average position RMSE for a velocity range is computed for all propeller conditions and both validation minimum snap trajectories $\mu = 0.7$ and $\mu = 1.1$. The tracking error at low speeds is quite high, this may be caused by the few amount of datapoints at these speeds combined with position errors associated controller initialization. Nevertheless, tracking errors quickly drop to $\approx 0.2$ [m] and then slowly increase with increasing speed to about $\approx 0.3$ [m] at a maximum velocity of $v_{max} \approx 3$ [m/s].

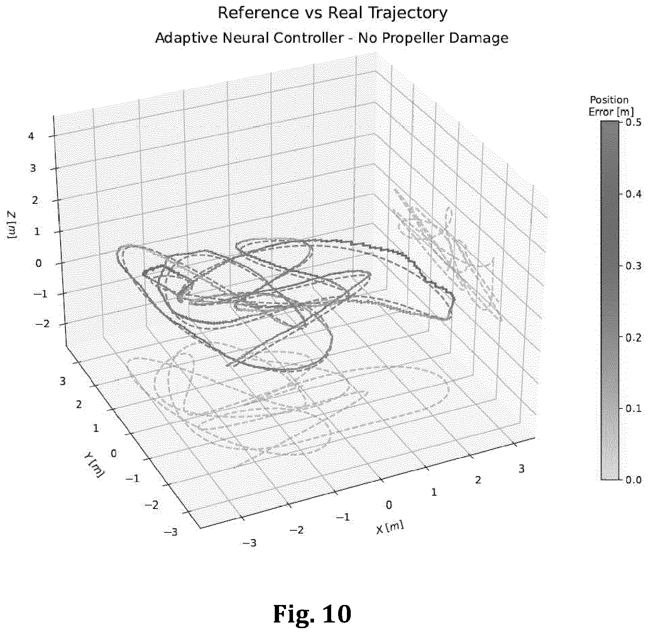

The trajectories flown using the neural adaptive controller and the nonlinear controller are shown in Figure 10 for all propeller damage conditions.

Propeller Damage Estimation

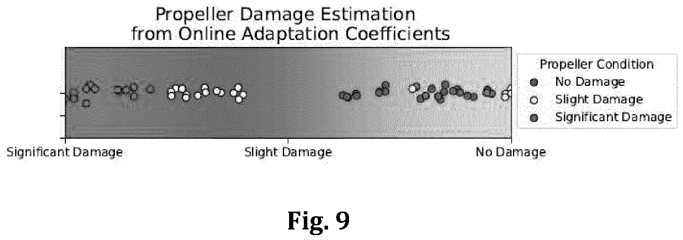

An interesting feature of the adaptive neural controller architecture is the ability to estimate the propeller damage condition from the online adaptation coefficients. The online adaptation coefficients will differ from those in training due to the position tracking term in the coefficient update in (12), nevertheless sufficient propeller condition information should remain. To showcase the feasibility of estimating the propeller damage condition from the online adaptation coefficient, t-SNE is performed on the higher dimension adaptation coefficients to reduce them into one dimension from which the propeller damage can be easily estimated as shown in Figure 9.

As shown, the adaptive neural controller according to the invention achieves impressive tracking results with minimal susceptibility towards propeller damage. The neural network $\phi$ successfully learns a representation of the unmodeled aerodynamic forces acting on the quadrotor.

Most quadrotor adaptive controllers in literature require powerful embedded computers or even a ground station. The adaptive neural controller runs onboard an aging dual-core CPU without breaking a sweat, a demonstration of the computational efficiency achieved with the claimed controller. The implementation of the network inference and adaptation allows the controller to run onboard at $\approx 30$ [Hz] with a CPU load of $\approx 60\%$ but could even run at a much faster $\approx 100$ [Hz] at a CPU load of $\approx 80\%$. For the offline learning phase, the DAIML algorithm is equally fast at learning an efficient representation of the aerodynamic forces taking approximately $\approx 3m$ to train a network from scratch on a laptop.

Noisy Measurements

The $\phi$ network is susceptible like any other neural network to the quality of the data it trains on. To compute the unmodeled force measurements acting on the drone the velocity measurements are differentiated, which further amplifies the noise. The OptiTrack velocity measurements experienced high noise, frequency dropouts and occasional asynchronous timing. Despite efforts to filter and clean the training and testing data some of noise and errors made it through into the ground truth data, degrading the quality of the learned representation $\phi$.

The poor quality of the OptiTrack measurements also influences the online adaptation. Significant filtering of the velocity measurements is required before applying backward finite difference to obtain usable measurements of the residual force y which have significant lag. This may cause oscillatory behaviour as can be seen in some of the trajectories in Figure 10.

Therefore, as shown, the adaptive neural architecture according to the invention is a computationally efficient and accurate trajectory tracking controller architecture. The adaptive neural controller is deployed fully onboard without the need of attaching powerful embedded computers, showcasing the computational efficiency of the controller implementation according to the embodiment described.

Thanks to the invention, the learned propeller damage invariant representation $\phi$ using DAIML successfully predicts a filtered zero-lag prediction of the unmodeled forces even at the limited speeds and propeller rpms of the experimental setup. The adaptive neural controller successfully adapts to the various degrees of propeller damage with minimal degradation in tracking performance significantly outperforming the nonlinear and velocity PID baseline controllers.

In this text, the term "comprises" and its derivations (such as "comprising", etc.) should not be understood in an excluding sense, that is, these terms should not be interpreted as excluding the possibility that what is described and defined may include further elements, steps, etc.

The invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

**Claims**

1.  Controller (1) for controlling the trajectory of a quadrotor (Q) provided with propellers (P), which comprises a closed loop whereby a control signal ($u_f$) is fed to an altitude loop and thrust mixer, the control signal ($u_f$) being:

$$u_f = ma_r^B + Rf_a^B + mg^B - K_p e_p - K_v e_v - \phi\left(x\right)\hat{A} \qquad (8)$$

where:

> $a_r$ is the reference acceleration of the desired trajectory;
> $e_p = p - p_r$ is the position tracking error;
> $e_v = v - v_r$ is the velocity tracking term;
> $Kp$ and $Kv$ are positive definite control gain matrices for position and velocity respectively;
> $f_a^B$ are the modelled aerodynamic forces in the body frame;
> $R$ is the body to inertial frame Rotation Matrix;
>
> such that the terms $ma_r^B + Rf_a^B + mg^B$ form the nominal model feedforward, $K_p e_p$ - $K_v e_v$ form the proportional feedback terms wherein $\phi(x)A$ are the unmodelled forces which form the feedback adaptation term that comprises the unmodeled forces, $\phi(x)$ is a Neural Network that is trained offline, and $A$ is a latent variable that is adapted online; wherein
> $\phi(x)$ has been obtained through training of data corresponding to different propeller damage conditions.

2.  Controller according to claim 1 wherein the representation $\phi(x)$ is obtained using offline training of a Deep Neural Network (DNN).

3.  Controller according to claim 2, wherein the deep neural network $\phi(x)$ training of the Deep Neural Network $\phi(x)$ is performed through a Domain adversarial meta-learning algorithm (DAIML).

4.  Controller according to claim 3, wherein the inputs of the network $\phi(x)$ are the velocity, quaternion and rpm states x = [v, q, rpm] of the quadrotor (Q), while the output representation is y = [y1, y2, y3, 1].

5.  Controller according to any of the preceding claims wherein the online adaptation is carried out with a Kalman-filter like estimator.

6.  Controller according to claim 4 wherein the current propeller damage condition is estimated online using the current latent variable $A$.

Fig. 1

Fig. 2

**First Layer**
50 Neurons
(ReLU)

**Second Layer**
60 Neurons
(ReLU)

**Third Layer**
50 Neurons
(ReLU)

**Fig. 3**

**Fig. 4**

t-SNE Plot of Training Adaptation Coefficients $A^*$ with $\alpha = 0.1$

t-SNE Plot of Training Adaptation Coefficients $A^*$ with $\alpha = 0$

**Fig. 5**

(a) Training Data

(b) Testing Data

(c) Validation Data

**Fig. 6**

**Fig. 7**

**Fig. 8**

Fig. 9

Fig. 10

Reference vs Real Trajectory
Nonlinear Controller - No Propeller Damage

**Fig. 11**

Fig. 12

Fig. 13

Reference vs Real Trajectory
Adaptive Neural Controller - Significant Propeller Damage

**Fig. 14**

Reference vs Real Trajectory
Nonlinear Controller - Significant Propeller Damage

## Fig. 15

Europäisches
Patentamt

European
Patent Office

Office européen
des brevets

# EUROPEAN SEARCH REPORT

Application Number

EP 23 38 3003

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Villanueva Aguado Mauro: "An Adaptive Neural Network Quadrotor Trajectory Tracking Controller Tolerant to Propeller Damage", , 10 July 2023 (2023-07-10), pages 1-71, XP093123080, Retrieved from the Internet: URL:https://repository.tudelft.nl/islandora/object/uuid:232b5015-df70-424b-91ab-149ed4d8416a/datastream/OBJ/download [retrieved on 2024-01-24] * page 9 * ----- | 1-6 | INV. G05D1/85 ADD. G05D101/15 G05D109/25 |

TECHNICAL FIELDS
SEARCHED        (IPC)

G05D

The present search report has been drawn up for all claims

| Place of search | Date of completion of the search | Examiner |
|---|---|---|
| Munich | 24 January 2024 | Etienne, Yves |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

&: member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Neural-Fly Enables Rapid Learning for Agile Flight in Strong Winds. **MICHAEL O'CONNELL** ; **GUANYA SHI** ; **XICHEN SHI** ; **KAMYAR AZIZZADENESHELI** ; **ANIMA ANANDKUMAR** ; **YISONG YUE** ; **SOON-JO CHUNG**. Science Robotics. American Association for the Advancement of Science, May 2022, vol. 7, eabm6597

- **O' CONNELL, SHI**. *Neural-Fly Enables Rapid Learning for Agile Flight in Strong Winds*
- **O'CONNELL, SHI**. *Neural-Fly Enables Rapid Learning for Agile Flight in Strong Winds*